# EUROPÄISCHE PATENTANMELDUNG

(11) **EP 1 398 687 A2**
(43) Veröffentlichungstag der Anmeldung: **17.03.2004**
(21) Anmeldenummer: 03020773.2
(22) Anmeldetag: 12.09.2003
(51) Int. Cl.: G05F 1/67, H01L 31/042

(54) **Verfahren zur Betriebsüberwachung einer Photovoltaik-Anlage**

(30) Priorität: 13.09.2002 DE 10242648
(71) Anmelder: Solarnet GmbH, 99334 Ichterhausen (DE)
(72) Erfinder: Goldbeck, Joachim, 99084 Erfurt (DE)
(74) Vertreter: TER MEER STEINMEISTER & PARTNER GbR

(57) **Zusammenfassung**

Die Erfindung betrifft ein Verfahren zur Betriebsüberwachung einer Photovoltaik-Anlage mit einer Anzahl von Photovoltaik-Elementen und zumindest einem Wechselrichter zur Umwandlung des von den Photovoltaik-Elementen erzeugten Gleichstroms in einen Wechselstrom. Die an den Photovoltaik-Elementen angelegte Gleichspannung ist durch den Wechselrichter veränderbar, und unterschiedlichen Spannungswerten entsprechende Werte des Gleichstroms können vom Wechselrichter gemessen und gespeichert werden. Erfindungsgemäß wird in einem Meß-Schritt eine Strom-Spannungs-Kennlinie gemessen, indem die Gleichspannung über einen Spannungsbereich hinweg verändert wird, der dem Betriebsbereich der Photovoltaik-Anlage entspricht, während der Verlauf des Gleichstroms in Abhängigkeit von der Gleichspannung gemessen und gespeichert wird, und in einem nachfolgenden Analyse-Schritt wird die gemessene Kennlinie mit einer gespeicherten Soll-Kennlinie verglichen.

## Beschreibung

Die vorliegende Erfindung betrifft ein Verfahren zur Betriebsüberwachung einer Photovoltaik-Anlage gemäß dem Oberbegriff des Anspruchs 1.

Photovoltaik-Anlagen bieten eine umweltfreundliche und ressourcenschonende Möglichkeit zur Umwandlung von Sonnenenergie in elektrischen Strom. Sie lassen sich beispielsweise zur dezentralen Versorgung einzelner Privathaushalte mit elektrischer Energie oder zum Einspeisen von Strom in das öffentliche Netz verwenden. Dazu wird üblicherweise eine Anzahl von Photovoltaik-Elementen auf einem Hausdach montiert und zusammengeschaltet. Zur Umwandlung des von den Elementen erzeugten Gleichstroms in-Wechselstrom, der sich in das Stromnetz einspeisen läßt, dienen sogenannte Wechselrichter.

Die Photovoltaik-Elemente weisen eine bestimmte Strom-Spannungs-Kennlinie auf, das heißt, der von ihnen erzeugte Strom ist abhängig von der anliegenden Gleichspannung. Da die elektrische Leistung gleich dem Produkt aus der Spannung und dem Strom ist, entspricht diese Kennlinie auch einer Leistungscharakteristik. Damit eine maximale Leistung der Photovoltaik-Anlage erzielt wird, ist es daher notwendig, die Photovoltaik-Elemente an einem Punkt ihrer Kennlinie zu betreiben, an dem dieses Produkt maximal ist. Dies läßt sich durch geeignete Wahl der Betriebsspannung erreichen. Die Wechselrichter sind daher dazu vorgesehen, die an den Photovoltaik-Elementen anliegende Gleichspannung zu verändern.

Da sich die Strom-Spannungs-Kennlinie in Abhängigkeit von äußeren Faktoren wie etwa der Einstrahlungsintensität, der Temperatur oder dergleichen verändert, muß dieser Punkt maximaler Leistung, der auch als "Maximum Power Point" (MPP) bezeichnet wird, ständig neu bestimmt werden. Zu diesem Zweck läßt sich durch die üblichen Wechselrichter die Spannung variieren, während die jeweils entsprechenden Stromwerte gemessen und gespeichert werden, so daß sich durch Errechnen der Leistungsdaten der optimale Spannungswert bestimmen läßt. Dieser Vorgang kann durch eine bestimmte Baugruppe des Wechselrichters durchgeführt werden, die gewöhnlich als "MPP-Tracker" bezeichnet wird.

Da die Anschaffungskosten für eine Photovoltaik-Anlage relativ hoch sind, stellt diese nur dann eine wirtschaftlich sinnvolle Investition dar, wenn das maximale Potential der Anlage voll ausgeschöpft wird. Dies ist jedoch unmöglich, wenn eines oder mehrere der Photovoltaik-Elemente defekt sind. Ein solcher Defekt ist durch die nach dem Stand der Technik bekannten Wechselrichter nicht zu diagnostizieren, da diese lediglich eine Leistungsoptimierung des vorliegenden Systems durchführen, indem in der oben beschriebenen Weise die Leistungswerte bei unterschiedlichen Spannungen verglichen werden. Ob die Leistungscharakteristik insgesamt mangelhaft ist, bleibt bei diesem Verfahren außer Betracht. Die in diesem Rahmen gesammelten Daten geben daher keinen ausreichenden Aufschluß über den Gesamtzustand der Anlage.

Aufgabe der vorliegenden Erfindung ist es daher, ein Verfahren der eingangs genannten Art zu schaffen, durch welches sich Fehler beim Betrieb einer Photovoltaik-Anlage bestimmen und analysieren lassen, so daß die Effizienz der Anlage gesteigert wird.

Diese Aufgabe wird erfindungsgemäß durch ein Verfahren gemäß Anspruch 1 gelöst.

Bei dem erfindungsgemäßen Verfahren zur Überwachung des Betriebs der Photovoltaik-Anlage wird zunächst in einem ersten Meß-Schritt die aktuelle Strom-Spannungs-Kennlinie aufgenommen. Dabei wird vom Wechselrichter die Gleichspannung kontinuierlich oder schrittweise über einen Wertebereich hinweg verändert, der dem Betriebsbereich der Anlage entspricht, also beispielsweise bei einem Spannungswert von Unendlich beginnt und nahe bei Null endet. Gleichzeitig wird die Größe des von den Photovoltaik-Elementen erzeugten Gleichstroms in Abhängigkeit von der anliegenden Spannung gemessen und gespeichert. Auf diese Weise läßt sich die Abhängigkeit des Stroms von der Spannung über den gesamten möglichen Betriebsbereich hinweg bestimmen, so daß man eine möglichst vollständige Kennlinie erhält. Dieser Meß-Schritt kann gegebenenfalls mit einem herkömmlichen Wechselrichter durchgeführt werden, der entsprechend programmiert ist, da die üblicherweise verwendeten Geräte ohnehin zum Speichern von Stromwerten und Spannungen vorgesehen sind.

In einem nachfolgenden Analyse-Schritt wird die gemessene Kennlinie mit einer vorgesehenen Soll-Kennlinie verglichen, welche einem idealen Betriebszustand der Photovoltaik-Anlage entspricht. Das erfindungsgemäße Verfahren nutzt den Umstand aus, daß die Strom-Spannungs-Kennlinie einer gestörten Anlage von derjenigen einer störungsfreien Anlage abweicht. Durch den Vergleich kann festgestellt werden, ob die gemessene Kennlinie Anomalien zeigt, die auf eine Betriebsstörung hindeuten. Auf diese Weise können Defekte in der Anlage festgestellt werden und Maßnahmen zur Beseitigung der Störung ergriffen werden. Es handelt sich hierbei also nicht um eine Leistungsoptimierung durch Einstellen einer Spannung an einer vorhandenen Kennlinie, wie es beim bekannten MPP-Tracking der Fall ist, sondern durch das erfindungsgemäße Verfahren wird die Möglichkeit geschaffen, die Kennlinie selbst zu analysieren. Das MPP-Tracking, das ebenfalls durchgeführt werden kann, wird für diesen Vorgang lediglich kurzzeitig unterbrochen.

Vorzugsweise wird in dem Analyse-Schritt eine Abweichung der gemessenen Kennlinie von der Soll-Kennlinie von der Anlage automatisch als Betriebsfehler identifiziert. In diesem Fall ist zur Erkennung eines Fehlers nicht mehr das Fachwissen einer Bedienungsperson wie etwa eines Technikers erforderlich, sondern die Analyse beinhaltet beispielsweise eine entsprechende Software zum Vergleich der Kennlinien, die Abweichungen bestimmter Art automatisch bestimmten Defekten zuordnen kann. Auch schleichende Prozesse und kleinere Fehler können auf diese Weise zuverlässig identifiziert werden.

In diesem Fall wird vorzugsweise beim Auftreten eines solchen Betriebsfehlers eine Störungsmeldung angezeigt, die dann durch die Bedienungsperson wahrgenommen werden kann. Auf diese Weise wird die Überwachung erleichtert, da nicht ständig eine Kontrolle durch entsprechend ausgebildetes Personal vorgenommen werden muß.

In einer bevorzugten Ausführungsform des Verfahrens wird der Analyse-Schritt durch eine Rechnereinheit vorgenommen, die vom Wechselrichter räumlich getrennt ist. Die Störungsanalyse kann auf diese Weise an einem Ort durchgeführt werden, der sich nicht an der Photovoltaik-Anlage selbst befindet, wie beispielsweise in einer weit entfernten Wartungszentrale.

Hierzu kann vorzugsweise die Rechnereinheit über einen Datenkanal entweder unmittelbar mit dem Wechselrichter oder mit einem an den Wechselrichter angeschlossenen Rechnermodul kommunizieren, welches Zwischenspeicher- und Steueraufgaben übernehmen kann.

Vorzugsweise kann der Meß-Schritt durch ein Signal eingeleitet werden, das von der Rechnereinheit oder dem Rechnermodul ausgeht oder zeitgesteuert im Wechselrichter erzeugt wird. Das erfindungsgemäße Verfahren läßt sich auf diese Weise umfassend automatisieren. In einer weiteren bevorzugten Ausführungsform sind über den Datenkanal Programmdaten oder Parameter von der Rechnereinheit zum Wechselrichter bzw. dem Rechnermodul übermittelbar.

Damit eine Kontrolle in regelmäßigen Intervallen gewährleistet wird, ist es ferner vorzugsweise möglich, den Meß-Schritt und den darauffolgenden Analyse-Schritt in zeitlichen Abständen wiederholt durchzuführen. Beispielsweise kann es ausreichend sein, die Photovoltaik-Anlage einmal täglich auf ihre ordnungsgemäße Funktion hin zu überprüfen, so daß das erfindungsgemäße Verfahren im Abstand von 24 Stunden komplett durchgeführt wird.

Damit Fehler bei der Aufnahme der Kennlinie vermieden werden, die beispielsweise durch teilweises Abschatten der Photovoltaik-Elemente bei bewölktem Himmel auftreten können, können in dem Meß-Schritt vorzugsweise mehrere Messungen der Kennlinie durchgeführt werden, von denen eine in dem Analyse-Schritt zum Vergleich mit der Soll-Kennlinie ausgewählt wird. Die Soll-Kennlinie wird beispielsweise durch die Verknüpfung theoretischer Werte mit den Werten eines geeichten Einstrahlungssensors definiert. Die Daten eines an der Photovoltaik-Anlage angebrachten Einstrahlungs-Sensors werden in dem Meß-Schritt zusätzlich aufgenommen und zur Auswertung in dem Analyse-Schritt, also beispielsweise zur Kalibrierung oder zur Auswertung der gemessenen Kennlinien, einbezogen. Dieser Einstrahlungs-Sensor gibt Anhaltspunkte dafür, wie die augenblickliche Bestrahlungssituation bei der Aufnahme der Kennlinie ist.

In einer bevorzugten Ausführungsform wird der Analyse-Schritt durch eine zentrale Rechnereinheit vorgenommen, die dazu vorgesehen ist, mit einer Anzahl von Wechselrichtern verschiedener lokaler Photovoltaik-Anlagen zu kommunizieren und Daten mit diesen auszutauschen.

In diesem Fall genügt eine einzige Rechnereinheit, um das erfindungsgemäße Verfahren an einer großen Anzahl von Photovoltaik-Anlagen durchführen zu können. Dadurch wird das Verfahren erheblich preiswerter. Ferner besteht die Möglichkeit, Messungen an verschiedenen Anlagen bei Bedarf zu koordinieren.

Eine Vorrichtung zur Durchführung des erfindungsgemäßen Verfahrens ist durch die Merkmale der Unteransprüche 12 bis 15 gekennzeichnet.

Im folgenden wird eine bevorzugte Ausführungsform des Verfahrens anhand der Zeichnung näher erläutert.
- Fig. 1: ist eine schematische Darstellung einer Photovoltaik-Anlage, die zur Durchführung des erfindungsgemäßen Verfahrens geeignet ist; und
- Fig. 2: ist ein Diagramm, das mögliche Strom-Spannungs-Kennlinien der Photovoltaik-Anlage aus Fig. 1 zeigt.

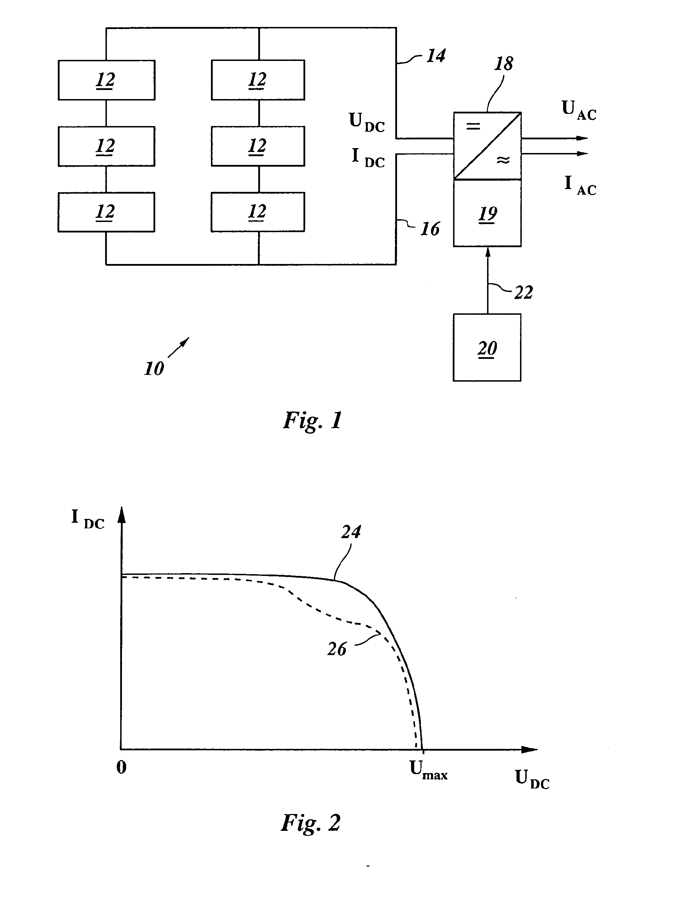

Die Photovoltaik-Anlage 10 in Fig. 1 umfaßt eine Anzahl von Photovoltaik-Elementen 12, die in zwei Gruppen parallel geschaltet sind, wobei die Elemente 12 innerhalb einer Gruppe in Serie geschaltet sind. Die Schaltung der einzelnen Photovoltaik-Elemente 12 kann abhängig von einer gewünschten Betriebsart ausgewählt werden und ist für das erfindungsgemäße Verfahren unerheblich.

Die Photovoltaik-Elemente 12 sind durch zwei elektrische Leitungen 14,16 mit einem Wechselrichter 18 verbunden. Über die Leitungen 14,16 liegt eine Gleichspannung U_{DC} an den Photovoltaik-Elementen 12 an. Diese Gleichspannung U_{DC} kann durch den Wechselrichter 18 verändert werden. Es besteht ferner die Möglichkeit, eine Photovoltaik-Anlage mit mehreren Wechselrichtern zu betreiben. Aus Gründen der Übersichtlichkeit ist die hier dargestellte Ausführungsform jedoch auf einen Betrieb mit einem einzigen Wechselrichter beschränkt.

Fällt Licht, also insbesondere Sonnenlicht, auf die Photovoltaik-Elemente 12, so erzeugen diese einen Gleichstrom I_{DC}, der über die Leitungen 14,16 in den Wechselrichter 18 eingespeist wird und durch diesen in einen Wechselstrom I_{AC} mit der Wechselspannung U_{AC} umgewandelt wird.

Dies ist insbesondere dann notwendig, wenn der durch die Photovoltaik-Anlage 10 erzeugte Strom in das öffentliche Stromnetz eingespeist werden soll.

Ferner umfaßt die Photovoltaik-Anlage 10 ein lokales Rechnermodul 19, das an den Wechselrichter 18 angeschlossen oder wahlweise in diesen integriert ist. Der Wechselrichter ist in der Lage, Daten aufzunehmen und insbesondere Werte des Gleichstroms I_{DC} in Abhängigkeit von der anliegenden Gleichspannung U_{DC} zu speichern. Das Rechnermodul 19 kann diese Daten über eine Datenleitung abrufen und selbst speichern. Zur Analyse werden die dort zwischengespeicherten Daten über eine Datenleitung 22 an eine zentrale Rechnereinheit 20 weitergegeben. Dies soll im folgenden näher erläutert werden.

Fig. 2 zeigt eine typische Strom-Spannungs-Kennlinie 24 (durchgezogene Kurve) einer Anordnung von Photovoltaik-Elementen 12, wie sie in Fig. 1 gezeigt ist. In einem relativ niedrigen Spannungsbereich liefern die Photovoltaik-Elemente 12 einen nahezu konstanten Strom I_{DC}, bis die Kurve abzufallen beginnt und bei einem bestimmten maximalen Spannungswert Uₘₐₓ auf Null abfällt, d. h. oberhalb dieses Spannungswertes Uₘₐₓ wird kein Strom I_{DC} mehr abgegeben. Bei einer höheren Sonneneinstrahlung ist die in Fig. 2 gezeigte Kennlinie 24 im wesentlichen parallel nach oben verschoben, da ein höherer Strom I_{DC} abgegeben wird. Dieser Fall ist der Übersicht halber in Fig. 2 nicht dargestellt.

Grundsätzlich ist es möglich, die Photovoltaik-Elemente an einem nahezu beliebigen Punkt in dem Spannungsbereich U_{DC} zwischen 0 und Uₘₐₓ zu betreiben. Dieser Wertebereich stellt somit den möglichen Betriebsbereich für die Photovoltaik-Elemente dar. Die Spannung U_{DC} läßt sich durch den Wechselrichter 18 auf einen gewünschten Wert einstellen, an welchem die Leistung maximal ist. Da bekanntlich die elektrische Leistung gleich dem Produkt aus Strom I_{DC} und Spannung U_{DC} ist, wird die Spannung U_{DC} vorteilhafterweise so festgelegt, daß dieses Produkt maximal wird. Die bekannten Wechselrichter 18 verfügen daher üblicherweise über eine Steuereinheit zur Durchführung des sogenannten MPP-Tracking, um den Punkt der maximalen Leistung (Maximum Power Point oder MPP) zu finden, indem die Veränderung des Stroms I_{DC} in Abhängigkeit von der Spannung U_{DC} untersucht wird und die Leistungen bei unterschiedlichen Spannungswerten verglichen werden können.

Fig. 2 zeigt eine weitere Kennlinie 26 (gestrichelte Kurve), deren Verlauf sich grundsätzlich von der weiter oben besprochenen Kennlinie 24 unterscheidet. Diese zweite Kennlinie 26 repräsentiert einen Fall, in welchem ein Defekt an den Photovoltaik-Elementen 12 vorliegt, der dazu führt, daß nicht das volle Leistungspotential der Anlage 10 ausgeschöpft werden kann. Damit dies erkannt werden kann, muß die aktuelle Kennlinie 26 der Photovoltaik-Anlage 10 weitgehend vollständig untersucht werden.

Diese Untersuchung wird wie folgt durchgeführt:

Das Rechnermodul 19 oder der Wechselrichter 18 selbst erzeugen einen Steuerimpuls, der die Durchführung eines Meß-Schritts auslöst. In diesem Meß-Schritt durchläuft die Photovoltaik-Anlage 10 den gesamten Spannungsbereich, in welchem ein Betrieb der Photovoltaik-Elemente 12 möglich ist, indem beispielsweise der Wechselrichter 18 die Gleichspannung U_{DC} auf Unendlich setzt und allmählich absenkt, bis der Kurzschlußstrom fließt. Während dieses Vorgangs wird der von den Photovoltaik-Elementen 12 abgegebene Gleichstrom I_{DC} vom Wechselrichter 18 gemessen und gespeichert. Auf diese Weise wird die komplette Strom-Spannungs-Kennlinie abgefahren und liegt in Form von Daten gespeichert im Wechselrichter 18 vor.

Die gemessene Kennlinie wird auf ein entsprechendes Signal des Rechnermoduls 19 hin an dieses übertragen und dort wiederum gespeichert. Anschließend werden die Daten über die Datenleitung 22 an die Rechnereinheit 20 übertragen, so daß der Analyse-Schritt durchgeführt werden kann. In der Rechnereinheit 20 ist ferner eine Soll-Kennlinie gespeichert, die einen idealen Betrieb der Anlage 10 repräsentiert. Sie errechnet sich aus theoretischen Werten und aus anderen Daten, wie etwa Daten bezüglich der Sonneneinstrahlung und Modultemperatur, die von einem Einstrahlungs-Sensor der Photovoltaik-Anlage 10 gemessen und übertragen werden. Durch einen entsprechenden Algorithmus wird die gemessene und übertragene Kennlinie mit der Soll-Kennlinie verglichen. In diesem Rahmen besteht die Möglichkeit, daß die Software der Rechnereinheit 20 automatisch bestimmte Abweichungen zwischen den zu vergleichenden Kennlinien erkennt und als Betriebsfehler identifiziert.

Daraufhin kann eine entsprechende Störungsmeldung angezeigt werden, die durch eine Betriebsperson wahrnehmbar ist, welche nachfolgend Maßnahmen zu Beseitigung der Störung ergreifen kann.

Beispielsweise stellt die Kennlinie 24 in Fig. 2 die in der Rechnereinheit 20 gespeicherte Soll-Kennlinie dar, während aufgrund einer Betriebsstörung vom Wechselrichter 18 die Störungs-Kennlinie 26 gemessen wird und über die Datenleitung 22 an die Rechnereinheit 20 übertragen wird. Bei der Analyse wird dann die gemessene Kennlinie 26 mit der Soll-Kennlinie 24 verglichen. Aufgrund der erheblichen Abweichung zwischen den Kennlinien stellt die Rechnereinheit 20 fest, daß eine Störung vorliegt, und identifiziert gegebenenfalls die Störungsquelle. Dieses Resultat wird durch eine entsprechende Ausgabeeinheit dargestellt.

Es kann sich als ausreichend erweisen, das erfindungsgemäße Verfahren, also den Meß-Schritt und den Analyse-Schritt, regelmäßig in größeren zeitlichen Abständen durchzuführen, beispielsweise einmal täglich. Es ist auch möglich, innerhalb des Meß-Schritts die aktuelle Strom-Spannungs-Kennlinie mehrfach durchzumessen und alle Messungen an die Rechnereinheit 20 zu übertragen. Dann wird in dem Analyse-Schritt aufgrund bestimmter Kriterien eine der Messungen zum Vergleich ausgewählt. Auf diese Weise kann verhindert werden, daß eine aufgrund bestimmter Umstände unbrauchbare Messung zur Betriebsanalyse der Photovoltaik-Anlage 10 herangezogen wird. Dies kann beispielsweise aufgrund einer untypischen Betriebssituation der Photovoltaik-Elemente 12 der Fall sein, wie es etwa bei einer teilweisen Abschattung der Anlage der Fall ist.

Zur Durchführung des erfindungsgemäßen Verfahrens läßt sich die Photovoltaik-Anlage 10 unterschiedlich ausgestalten. Es ist beispielsweise möglich, daß das Rechnermodul 19 selbst die Spannungsführung vornimmt und die Kennlinie unmittelbar in dieser gespeichert wird, anstatt die Kennlinie zunächst im Wechselrichter 18 zwischenzuspeichern. Es wird sich als vorteilhaft erweisen, die bereits vorhandenen Möglichkeiten des Wechselrichters 18 zu nutzen, da dieser zur Durchführung des MPP-Tracking Möglichkeiten zur Speicherung von Strom- und Spannungsdaten bietet. Ferner ist üblicherweise eine Schnittstelle am Wechselrichter 18 vorhanden, durch welches sich die entsprechenden Daten sowie weitere Parameter wie etwa die Betriebstemperatur, etc. auslesen lassen.

Daher kann sich ein Umrüsten der Hardware des Wechselrichters 18 erübrigen. Schließlich besteht die Möglichkeit, beim Betrieb einer Anlage mit mehreren Wechselrichtern ein einziges lokales Rechnermodul 19 einzusetzen, welches vor Ort an die Wechselrichter angeschlossen ist und mit der zentralen Rechnereinheit 20 kommuniziert.

Die Datenübertragung an die Rechnereinheit 20 kann drahtgebunden oder drahtlos erfolgen. In jedem Fall kann sich die Rechnereinheit 20 an einem weit von der Photovoltaik-Anlage 10 selbst entfernten Ort befinden, so daß die Betriebsüberwachung durch ein fachkundiges Personal durchgeführt werden kann und die Anwesenheit einer Wartungsperson an der Photovoltaik-Anlage 10 nicht erforderlich ist.

Ein weiterer Vorteil der Trennung der Rechnereinheit 20 von dem Wechselrichter 18 besteht darin, daß eine große Anzahl von Photovoltaik-Anlagen 10 durch eine einzige, zentrale Rechnereinheit 20 durchgeführt werden kann. Dadurch werden in erheblichem Maße Kosten gespart. Durch die zentrale Rechnereinheit 20 können die Meß-Schritte der einzelnen, unabhängigen Photovoltaik-Anlagen 10 zeitlich koordiniert werden, und alle Daten werden zentral gespeichert. Dies bietet zahlreiche weitere Analysemöglichkeiten, wie beispielsweise den Vergleich unterschiedlicher Photovoltaik-Anlagen und deren Betriebsverhalten.

## Patentansprüche

1. Verfahren zur Betriebsüberwachung einer Photovoltaik-Anlage (10), welche Anlage eine Anzahl von Photovoltaik-Elementen (12) und zumindest einen Wechselrichter (18) zur Umwandlung des von den Photovoltaik-Elementen (12) erzeugten Gleichstroms (I_{DC}) in einen Wechselstrom (I_{AC}) umfaßt, wobei die an den Photovoltaik-Elementen (12) angelegte Gleichspannung (U_{DC}) durch den Wechselrichter (18) veränderbar ist und unterschiedlichen Spannungswerten (U_{DC}) entsprechende Werte des Gleichstroms (I_{DC}) vom Wechselrichter (18) gemessen und gespeichert werden, **dadurch gekennzeichnet, daß** in einem Meß-Schritt zur Messung einer Strom-Spannungs-Kennlinie (26) die Gleichspannung (U_{DC}) über einen Spannungsbereich hinweg verändert wird, der dem Betriebsbereich der Photovoltaik-Anlage (10) entspricht, während der Verlauf des Gleichstroms (I_{DC}) in Abhängigkeit von der Gleichspannung (U_{DC}) gemessen und gespeichert wird, und daß in einem nachfolgenden Analyse-Schritt die gemessene Kennlinie (26) mit einer gespeicherten Soll-Kennlinie (24) verglichen wird.

2. Verfahren gemäß Anspruch 1, **dadurch gekennzeichnet, daß** in dem Analyse-Schritt eine Abweichung der gemessenen Kennlinie (26) von der Soll-Kennlinie (24) automatisch als Betriebsfehler identifiziert wird.

3. Verfahren gemäß Anspruch 2, **dadurch gekennzeichnet, daß** beim Auftreten eines Betriebsfehlers eine Störungsmeldung angezeigt wird, die durch eine Bedienungsperson wahrnehmbar ist.

4. Verfahren gemäß Anspruch 1 bis 3, **dadurch gekennzeichnet, daß** der Analyse-Schritt durch eine Rechnereinheit (20) vorgenommen wird, die vom Wechselrichter (18) räumlich getrennt ist.

5. Verfahren gemäß Anspruch 4, dadurch **gekenazeichnet,** daß die Rechnereinheit (20) über einen Datenkanal (22) unmittelbar mit dem Wechselrichter (18) oder mit einem an den Wechselrichter (18) angeschlossenen Rechnermodul ( 19) kommuniziert.

6. Verfahren gemäß Anspruch 4 oder 5, **dadurch gekennzeichnet, daß** der Meß-Schritt durch ein Signal eingeleitet wird, das von der Rechnereinheit (20) oder dem Rechnermodul (19) ausgeht oder zeitgesteuert im Wechselrichter (18) erzeugt wird.

7. Verfahren gemäß Anspruch 5 oder 6, **dadurch gekennzeichnet, daß** über den Datenkanal (22) Programmdaten oder Parameter von der Rechnereinheit (20) zum Wechselrichter (18) bzw. dem Rechnermodul (19) übermittelbar sind.

8. Verfahren gemäß einem der vorhergehenden Ansprüche, **dadurch gekennzeichnet. daß** der Meß-Schritt und der Analyse-Schritt in zeitlichen Abständen wiederholt durchgeführt werden.

9. Verfahren gemäß einem der vorhergehenden Ansprüche, **dadurch gekennzeichnet, daß** in dem Meß-Schritt mehrere Messungen der Kennlinie (26) durchgeführt werden und in dem Analyse-Schritt eine der gemessenen Kennlinien (26) zum Vergleich mit der Soll-Kennlinie (24) ausgewählt wird.

10. Verfahren gemäß einem der vorhergehenden Ansprüche, **dadurch gekennzeichnet, daß** in dem Meß-Schritt ferner die von einem Einstrahlungs-Sensor gemessenen Daten aufgenommen werden und diese zur Auswertung in den Analyse-Schritt einbezogen werden.

11. Verfahren gemäß einem der Ansprüche 4 bis 10, **dadurch gekennzeichnet. daß** der Analyse-Schritt durch eine zentrale Rechnereinheit (20) vorgenommen wird, welche zum Datenaustausch mit einer Anzahl von Wechselrichtern (18) bzw. Rechnermodulen (19) verschiedener Photovoltaik-Anlagen (10) vorgesehen ist.

12. Vorrichtung zur Durchführung des Verfahrens gemäß einem der Ansprüche 4 bis 11, **gekennzeichnet durch** eine vom Wechselrichter (18) der Photovoltaik-Anlage (10) räumlich getrennte Rechnereinheit (20), die zum Datenaustausch mit dem Wechselrichter (18) vorgesehen ist.

13. Vorrichtung gemäß Anspruch 12, **gekennzeichnet durch** ein Rechnermodul (19) zum Datenaustausch zwischen dem Wechselrichter (18) und der Rechnereinheit (20), welches einerseits mit dem Wechselrichter (18) und andererseits mit der Rechnereinheit (20) kommuniziert.

14. Vorrichtung gemäß Anspruch 12 oder 13, **dadurch gekennzeichnet, daß** die Rechnereinheit (20) dazu vorgesehen ist, Daten bezüglich der an den Photovoltaik-Elementen (12) anliegenden Spannung (U_{DC}) und des von ihnen erzeugten Gleichstroms (I_{DC}) vom Wechselrichter (18) bzw. dem Rechnermodul (19) zu empfangen und mit gespeicherten Daten zu vergleichen.

15. Vorrichtung gemäß einem der Ansprüche 12 bis 14, **dadurch gekennzeichnet, daß** die Rechnereinheit (20) zum Datenaustausch mit einer Anzahl von Rechnermodulen (19) bzw. Wechselrichtern (18) verschiedener Photovoltaik-Anlagen (10) vorgesehen ist.
